# EUROPEAN PATENT SPECIFICATION

(11) **EP 0 870 568 B1**
(45) Date of publication and mention of the grant of the patent: **02.07.2003**
(21) Application number: 98106702.8
(22) Date of filing: 14.04.1998
(51) Int. Cl.: B23K 23/00

(54) **Strip welder and method**
Verfahren und Vorrichtung zum Schweissen von Streifen
Méthode et appareil pour le soudage de bandes

(30) Priority: 11.04.1997 US 43296 P
(43) Date of publication of application: 14.10.1998
(73) Proprietor: ERICO INTERNATIONAL CORPORATION, Solon Ohio 44139 (US)
(72) Inventor: Fuchs, Jean Claude, L'Etrat 42580 (FR)
(74) Representative: Gille Hrabal Struck Neidlein Prop Roos

(56) References cited:
- EP-A- 0 526 362
- DE-B- 1 169 763
- US-A- 3 189 959

## Description

This invention relates generally as indicated to a strip welder and method and more particularly to an exothermic welding apparatus for welding generally flat objects such as electrical conductors in the form of strip, braid, bars, tape, and the like, and a process for economically forming good high ampacity low resistance electrical connections for such objects.

A welding apparatus for welding rails having the features of the preamble of claim 1 is disclosed in US-A-3,189,959.

Exothermic welding has become recognized as a preferred way to form top quality high ampacity low resistance electrical connections. Reusable refractory molds usually made of graphite or the like are widely used with exothermic welding materials to make a wide variety of such high ampacity low resistance electrical connections. Typical of such molds are those sold under the well known trademark CADWELD® by ERICO International of Solon, Ohio USA.

The reusable molds are two or more part molds usually opened and closed and held together by toggle clamps. The mold parts have faces which abut at a parting plane in which are formed recesses forming the various cavities and passages when the parts are clamped together. Typically the mold parts form a weld chamber, which usually Includes a riser which may be the enlarged lower end of a tap hole passage which extends from the top of the mold to the weld chamber.

The parts to be welded enter the weld chamber through sleeving passages which extend from outside the mold to the weld chamber. Such passages usually extend horizontally or from the bottom. Horizontal passages are typically employed when welding conductor-to-conductor. They may be used in combination with a vertical passage when welding conductors to an earthing rod, for example.

Typical exothermic welding apparatus are disclosed in DE-B-1 169 763 and EP-A-0 526 362.

A crucible normally sits on top of the assembled mold parts. The crucible includes a chamber holding the exothermic material on top of a fusible disk. A sprue or tap hole below the disk communicates with the top of the tap hole of the mold. When a measured and controlled quantity of exothermic material is ignited, it forms molten metal which fuses the disk permitting the molten metal to run downwardly into the weld chamber to weld any parts exposed to the chamber. Any slag forms on top of the weld metal and normally accumulates in the riser. After the weld cools, the mold is disassembled and any slag removed. The mold and crucible are cleaned for reuse.

Such molds can be rather intricate and are not insignificant in cost. More importantly, for each type of connection a different mold assembly is normally required. This creates an extremely large number or inventory of molds, and makes the storage, transportation, and selective use of such molds both costly and burdensome. While some mold sets may accommodate different size conductors, usually with shims, sleeving or packing around smaller conductors in larger passages, such shims or sleeving contribute to the wear of the molds shortening their useful lives. All of the above contributes to the cost of making such high quality connections. Because of such costs, users and owners may select less expensive but less efficient connections, and connections of lower quality.

Accordingly, the object of the present invention is to maintain the cost of the apparatus and methods for making such exothermic connections as low as possible by reducing the number of molds parts required to make a variety of types and sizes of connections, and by reducing the wear on the fewer molds parts and simplifying fixtures for holding, opening and closing the molds parts.

This object is accomplished by an apparatus having the features of independent claim 1. Embodiments and improvements of such apparatus are subject of dependent claims 2 to 10.

This object is also accomplished by method comprising the features of independent claim 11. Embodiments and improvements of such method are subject of dependent claims 12 to 15.

The strip welder of the present invention utilizes relatively few mold parts each having a clamping face to weld flat conductors such as conductive strip, bar, braids or even tape. One mold part includes a top hole leading to a weld chamber, and some such tap hole molds may include shallow channels in the clamping face. A counter-mold part includes a chamber in the parting face and strip channels which accommodate the strip to be welded when the mold parts are clamped together.

The counter-mold part has a generally square face and is supported in a fixture so that it can be turned 90° to form different types of connections. The counter mold may have an opposite face to make yet further types or sizes of connections. The molds are supported in a fixture which releasably secures the molds for quick interchangability. By changing the one mold part which includes the tap hole, the molds may be oriented easily for making horizontal or vertical connections. The fixture includes a slightly angled crucible support for a vertical orientation weld.

With the strip welder and method of the present invention a wide variety of sizes and types of electrical connections can be made with relatively fewer refractory mold parts.

To the accomplishment of the foregoing and related ends, the invention then comprises the features hereinafter fully described and particularly pointed out in the claims, the following description and the annexed drawings setting forth in detail certain illustrative embodiments of the invention, these being indicative, however, of but a few of the various ways in which the principles of the invention may be employed, wherein
Figure 1 is an exploded view of the components of the present invention with the fixture oriented for horizontal welding;
Figure 2 is a similar view with the fixture oriented for vertical welding;
Figure 3 is a top plan view of the fixture without the molds;
Figure 4 is a side elevation of the fixture showing in phantom lines the hinge movement for opening and closing the fixture;
Figure 5 is a side elevation of one form of mold part which can be used alone to weld a strip to a metal surface;
Figure 6 is a side elevation of another mold part which can be used with the mold part of Figure 7 to make a variety of strip connections;
Figure 7 is a side elevation of a counter-mold part for use with the mold part of Figure 6, for example;
Figure 8 is a vertical section of a mold part which can be used to weld strip to a vertical surface;
Figure 9 is a side elevation partially broken away and in section of a mold part which can be used with the mold part of Figure 10 to make a variety of vertically oriented strip connections;
Figure 10 is a side elevation of a counter-mold part for use with the mold part of Figure 9;
Figure 11 is a side elevation of another type of counter-mold;
Figure 12 is a fragmentary view of a weld which can be made with the mold of Figure 5 alone;
Figures 13-16 are illustrations of the exemplary welds which can be made with the mold set of Figures 6 and 7, some being formed by repositioning the mold of Figure 7 90°;
Figure 17 is an Illustration of the vertical type of weld which can be made with the mold of Figure 8 alone; and
Figures 18-20 are illustrations of exemplary vertical welds which can be made with the mold set of Figures 9 and 10, some being formed by repositioning the mold of Figure 10 90°.

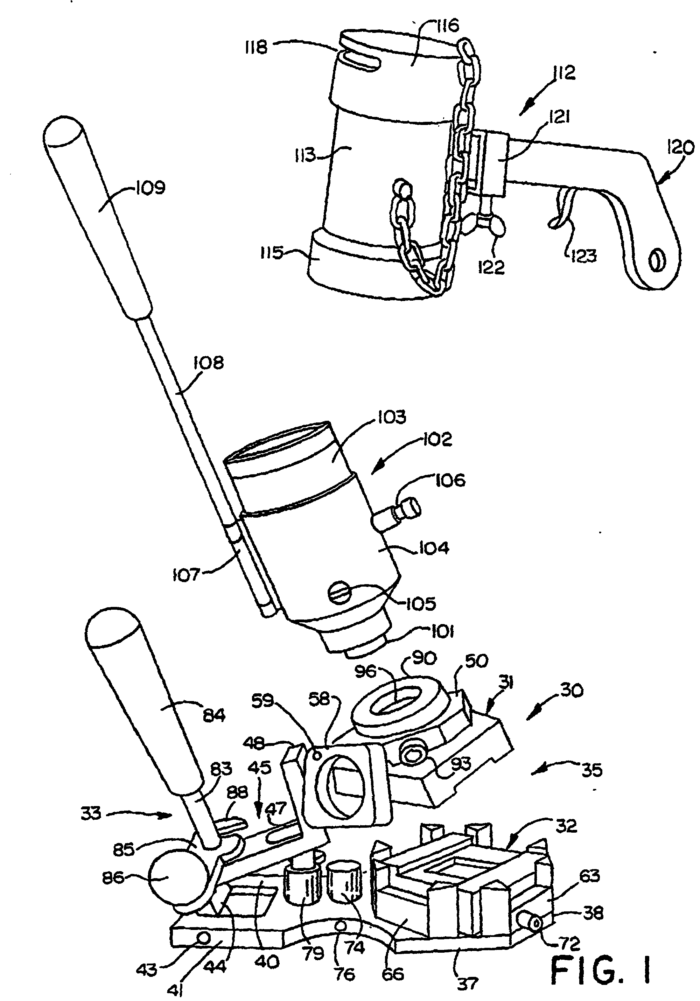

Referring initially to Figure 1, it will be seen that the strip welder of the present invention is shown generally at 30 and includes a mold part 31 and a counter-mold part 32 which are supported by fixture 33. In Figure 1 the fixture is shown partially open with the mold part 31 separated from the mold part 32 providing an opening or separation between the mold parts seen at 35 allowing the parts to be welded to be inserted in the proper position before the fixture closes the molds on each other and the parts to be welded.

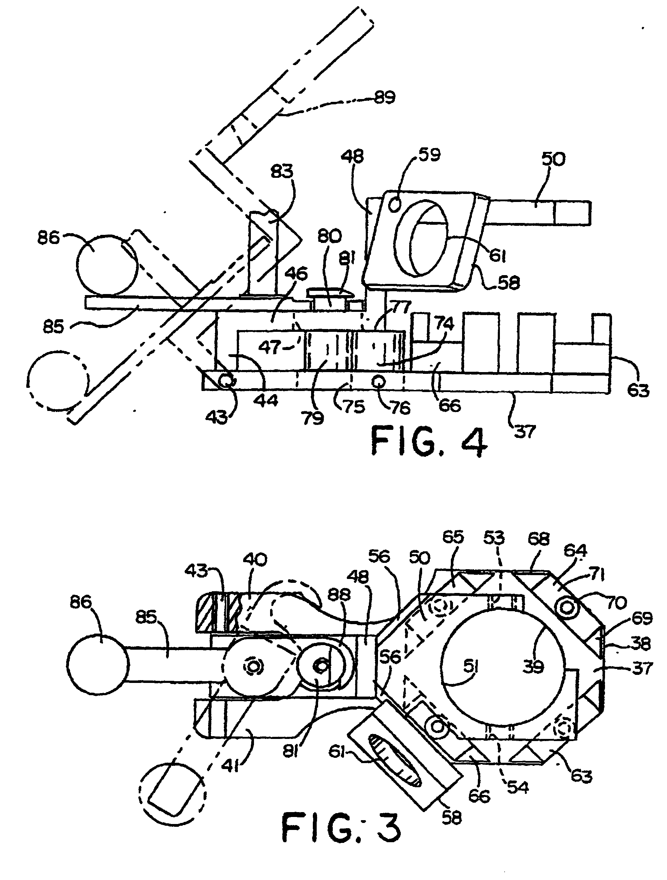

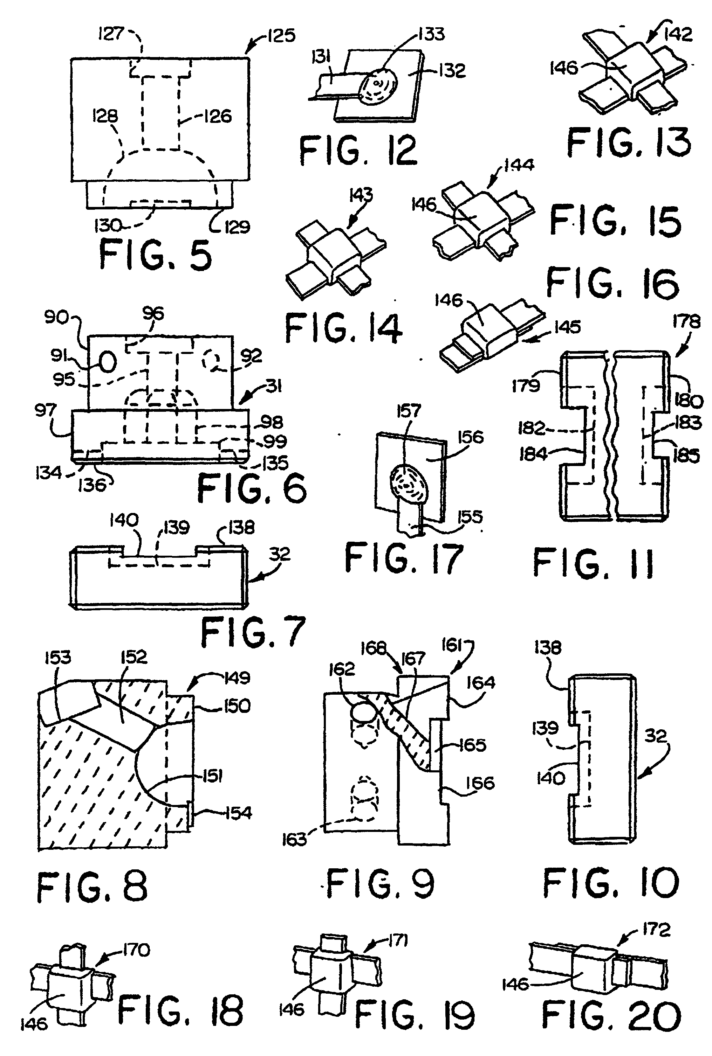

The mold 31 is shown in detail in Figure 6 and will be described later. The counter-mold 32 may have a variety of configurations and several forms are shown in Figures 7, 10 and 11. The molds are supported by the fixture which is illustrated in more detail in Figures 3 and 4, and the fixture, with additional reference to such Figures, will be described initially.

The fixture includes a base 37. The base 37 is in the form of a plate which includes an enlarged end 38 having a generally octagonal external configuration, which end includes a central hole 39. The opposite end of the base plate is generally U-shape having two spaced legs 40 and 41. Pivoted between such legs at 43 is the down turned end 44 of a pivot support 45. The pivot support 45 includes a midsection 46 provided with an elongated hole 47, and an upturned end 48. The midsection 46 is generally at right angles to the down turned pivot end section 44 and the upturned outer end 48. Secured to the top of the upturned outer end is a plate 50 which is provided with an almost complete circular hole 51. As illustrated in Figure 3, the hole 51 extends for somewhat more than 270° and is aligned with the hole 39. The plate 50 includes tapped holes 53 and 54 which are diametrically positioned with respect to the hole 51. While most of the profile edges of the plate seen in Figure 3 are normal to the plane of such Figure, the plate does Include edges near the support 48 seen at 56 which are inclined at about 20° to the axis of the hole 51. A crucible support indicated at 58 is mounted on one of those surfaces by a suitable fastener 59. The crucible support is a generally rectangular plate having a center enlarged hole 61 which supports the crucible when a vertical orientation weld is being made. This use of the crucible support will be described later.

Secured to the top of the base plate 37 are four quadrant spaced brackets 63, 64, 65 and 66. Each bracket includes triangular upstanding corner posts seen at 68 and 69, and each is secured to the base plate by a fastener 70 extending through the reduced height center portion 71. The bracket 63 is provided with a set screw 72 seen in Figure 1 which is designed to clamp the mold 32 within the confines of brackets. It is noted that the brackets are arranged to provide a generally square enclosure for the generally square counter-mold 32, and that the flat edges of the mold each extend at about 45° to the pivot access or hinge 43. The strip passing diagonally between the clamp faces of the molds 31 and 32 clears the hinge area of the fixture. The elevated triangular posts not only confine the mold, but provide the edges of guide slots for the strip. The depressed center portions which provide clearance for the strip, but also enable an installer to remove and replace a counter-mold quite easily, even with a gloved hand.

Also mounted on the base plate is a stop post 74 which extends through a hole 75 in the base plate and is adjustably clamped in place by set screw 76. The top of the stop post is designed to engage the heel of the hinge support as seen at 77 in Figure 4. This adjustably limits the shut height of the fixture. Extending upwardly from the base next to the stop post 74 is a shoulder stud 79 which includes a reduced diameter upper portion 80 to which is secured locking head 81. Extending upwardly from the intermediate portion 46 of the hinged support is a handle 83 having a grip 84. The handle 83 also serves as a pivot for a lever 85 having a knob grip 86 on the outer end. The inner end Is provided with a hook 88 adapted to swing beneath the head 81 of the locking stud 79 as seen in the full line positions of Figures 3 and 4. The locking stud head, of course, projects through the hole 47 when the upper pivoting support is in the shut or closed position seen in Figure 4. Moving the handle to the full line position seen will lock the fixture closed. The open position is shown in phantom lines at 89.

The upper mold 31 which is also shown in detail in Figure 6 includes a cylindrical neck 90 which includes diametrically opposed recesses 91 and 92. These recesses accommodate the studs of shoulder bolts 93 seen in Figure 1 which are threaded in the diametrically opposed holes 53 and 54. In this manner the mold 31 is secured to the hinged portion of the fixture, and the bolts provide a slight gimbal pivot for the upper mold enabling it to adjust slightly to ensure that it is properly pressed against the counter-mold and any strip or other objects to be welded therebetween.

As noted more clearly in Figure 6, the mold 31 also includes a tap hole 95 which extends from a circular seat 96 into the rectangular portion 97 of the mold 31 which contains a riser chamber 98 and a weld chamber 99.

The tap hole seat accommodates the nozzle 101 of crucible assembly 102. The crucible assembly is a refractory chamber formed in two half-round blocks of refractory material indicated at 103, one of which is held in half-round frame 104 by fastener 105. The opposite crucible part is held in a similar half-round frame which is locked to the stud 106 when closed. Both frames and crucible sections are hinged 107 to handle stud 108 which includes a grip 109.

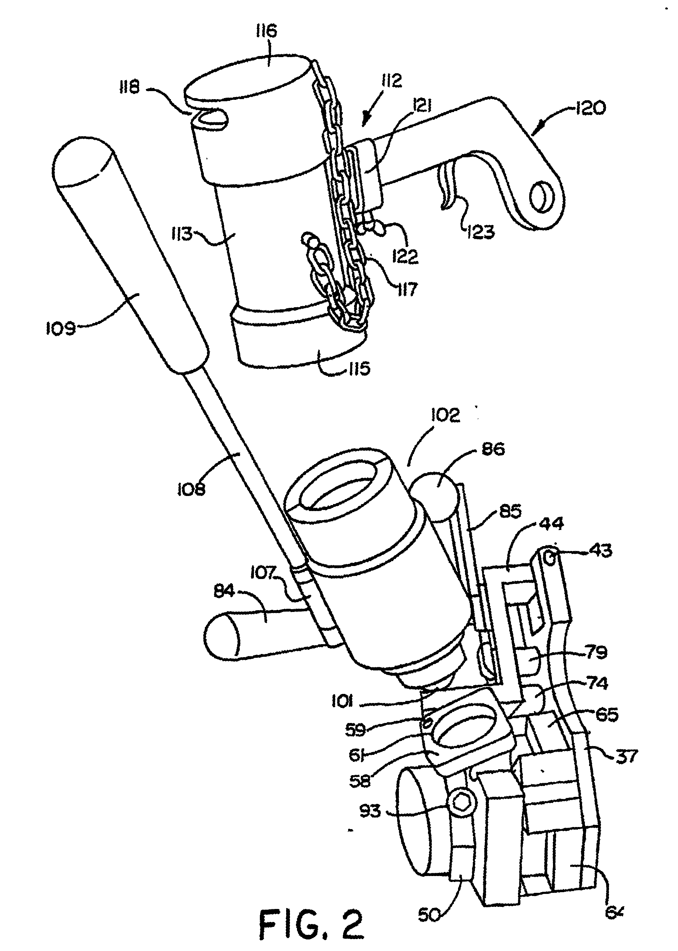

When a weld is to be made, the exothermic material is inserted into the top of the crucible and into the crucible chamber on top of a metal disk which is seated at the bottom of the crucible chamber over the tap hole of the crucible. A starting powder may be inserted on top of the exothermic material. The exothermic material, when ready to use, is then ignited by the igniter assembly seen at 112 in Figures 1 and 2. The igniter includes a cylindrical container 113 which has a bell-mouth bottom 115 designed to telescope over the top of the crucible. The igniter includes a removable lid 116 which may be attached to the chamber 113 by the chain 117. The lid includes a vent opening 118 directed away from the installer. A flint gun shown at 120 is secured in collar 121 projecting from the container 113 by the thumb screw 122. When the trigger 123 is actuated, a spark is generated within the container 113 which then ignites the starting powder and the exothermic material within the crucible. The exothermic reaction fuses the disk permitting the molten metal formed to run downwardly through the nozzle 101 and into the assembled molds.

Referring now to Figures 5-11, there is illustrated some of the few molds which can be used to make many different types of connections both in a horizontal orientation as seen in Figure 1 or a vertical orientation as seen in Figure 2.

Figure 5 illustrates a half or tap hole mold 125 which can be used by itself to make a weld connection such as seen in Figure 12. The mold 125 includes a tap hole 126 having at one end a crucible seat 127. The tap hole extends to an enlarged dome-like chamber 128 which opens to the bottom of the mold at the mold clamp face 129. The clamp face includes a laterally extending recess channel 130 designed to accommodate a strip 131 such as seen in Figure 12. The mold 125 may be used by itself secured in the hinged portion of the fixture, and clamped against a metal plate 132. The weld metal mass 133 is formed by the chamber 128. The connection seen in Figure 12 is known as a CG connection. If the metal plate 132 is relatively thin, it may be supported or backed up by a refractory block in the base of the fixture.

Figure 6 illustrates the half mold 31 shown in the fixture 33. The lower rectangular portion 97 which includes the weld chamber 99 has aligned shallow recess channels 134 and 135 in the clamping face 136 on opposite sides of the chamber 99.

The counter-mold 32 seen in Figure 7 includes a clamping face 138 in which is formed a weld chamber recess 139 opposite the recess or chamber 99 in the half mold. Opposite shallow grooves or channels seen at 140 relieve the clamping face and accommodate strip to be welded. In Figure 7 the channels 140 extend perpendicular to the plane of the page while the channels 134 and 135 extend parallel to such plane. It can be seen that by turning the counter-mold 32 90° the mold set 31 and 32 will form four different types of connection both crossing and in-line. For example, the mold set will form connections EB, EN, BN and BG. These four connections are seen at 142, 143, 144 and 145 in Figures 13-16 respectfully. In Figure 16 the counter-mold has been turned 90° from the mold in Figures 13, 14 and 15. The matching chambers form the weld metal mass 146 in each weld providing a good high ampacity low resistance connection between the two strips.

For a single connection to a plate in a vertical orientation such as seen in Figure 17, a single mold illustrated in Figure 8 at 149 is employed. The mold includes a vertical clamp face 150 in which is formed the weld recess 151. The recess is in communication with inclined tap hole 152 leading to inclined crucible seat 153. The inclined crucible seat is inclined at about 20° from horizontal which is the approximate inclination of the crucible support 58 on the upper hinged support of the fixture. A channel recess 154 is provided in the clamping face 150 which may accommodate a strip 155 in the connection to plate 156. The weld mass 157 is formed by the chamber 151.

Figure 9 illustrates a half mold 161 which generally corresponds to the mold 31 but which is adapted for vertical orientation connections. Like the mold 31, the mold 161 includes the diametrically opposed holes 162 and 163 to receive the fasteners 93 in the hinged support. The damping face 164 is provided with the weld recess 165 which is in communication with channels 166. The square upper portion on the mold is cut away as indicated at 167 to provide an inclined opening 168. In this manner with the half mold 161 in the hinged fixture, the crucible may be supported on the inclined crucible support to direct the molten metal into the opening 167. The inclined crucible support may be mounted on either side as seen in comparing Figures 1 and 2.

The opposite or counter-mold used with the half mold of Figure 9, may be the same counter-mold 32 seen in Figure 7. The mold has, however, been turned for a vertical orientation and includes the chamber 39 in the clamp face 138 with the strip accommodating recesses 140. Even in the vertical orientation, the counter-mold 32 may be turned 90° to form a variety of connections. For example, the mold set of Figures 9 and 10 may form an ED, an EE, a DE, a BQ, a BF and a BJ connection. Some of these connections are seen in Figures 18, 19 and 20. For example, the weld connection 170 seen In Figure 18 may be an ED type connection with the weld mass 146 being essentially the same as in the horizontal connections of Figure 13-16. The strips illustrated cross and overlap between the clamping faces of the mold.

The connection 171 seen in Figure 19 may, for example, be a BQ connection, while the connection 172 seen in Figure 22 may be a BF connection. In any event, a single mold set will make up to six different connections in a vertical orientation.

Referring now to Figure 11, there is illustrated a counter-mold 178 which is somewhat thicker than the counter-mold seen in Figures 7 and 10. The counter-mold 178 has opposite clamping faces 179 and 180 in which are formed weld recesses 182 and 183, respectively. The shallow grooves 184 and 185 in such faces may be a different size enabling the counter-mold to be turned both 90° and to be flipped over face-to-face to form different types of strip or braid connections, for example. It will also be appreciated that certain types of connections may be made with a single counter-mold, either horizontally or vertically, or aligned or crossing as seen in comparing the various connections made.

In any event, with the present invention the high ampacity low resistance electrical connections between strip, bar, braid or other flat conductors can readily be made both vertically and horizontally and with relatively few simple molds. To make in-line or transverse connections, the counter-mold is simply repositioned 90° and vice versa whether vertical or horizontal. The invention not only reduces the number of mold sets required, but provides ease of handling and application.

## Claims

1. Apparatus for welding flat objects such as electrical conductors in the form of strip, braid, bars, tape, and the like, said apparatus comprising one mold (31) and another mold (32), each having at least one clamping face (129; 136; 138; 150; 164; 179; 180), a channel (130; 34; 135; 140; 154; 166; 184; 185) in the clamping face of both of said molds, said channels being adapted to receive the objects to be welded together, means to clamp the molds together with weld objects (131; 132; 155; 156) in said channels, and means to introduce weld metal to the objects to weld them together, **characterized in that,** said apparatus includes a fixture (33; 37; 63 to 66) supporting one of said molds (31 or 32) for movement 90°C to orient its channel parallel to or transverse the channel of the other mold to form an aligned or transverse strip weld joint (142; 143; 144; 145; 170; 171; 172) with the introduction of the weld metal (133; 146; 157).

2. Apparatus as set forth in claim 1, wherein one of said molds includes a tap hole (152) for introduction of weld metal to the mold (31, 32; 149; 161; 178).

3. Apparatus as set forth in claim 1 or 2, wherein said fixture (37, 63 to 66) removably supports said one of said molds (31 or 32) for limited pivoting movement about a gimbal axis (43).

4. Apparatus as set forth in one of claims 1 to 3, wherein said fixture (33; 37; 63 to 66) includes means removably supporting said one of said molds (31 or 32) for replacement with molds having a tap hole (152) oriented horizontally or vertically.

5. Apparatus as forth in claim 4, wherein said fixture includes a crucible support (58; 153) for use when the fixture is in a vertical orientation.

6. Apparatus as set forth in claim 4, wherein one of said molds (31) includes a crucible seat (90) for directly supporting a crucible (102) when said fixture (33; 37; 63 to 66) is in a horizontal orientation.

7. Apparatus as set forth in one of claim 1 to 6 wherein said fixture (33) is a hinged two-part fixture, one part of said fixture being for each mold (31, 32).

8. Apparatus as set forth in claim 5, wherein said crucible support (58; 153) is angled and mounted on one of sold fixture parts for supporting a crucible (102) when said fixture is in a vertical orientation.

9. Apparatus as set forth in claim 6, wherein said one of said fixture parts supports said one of said molds (31) with a gimbal pivot (43), and said fixture includes an adjustable shut position to accommodate molds (31, 32) of different dimensions.

10. Apparatus as set forth In one of claims 1 to 9, wherein said channels (130; 134; 135; 140; 154; 166; 184; 185) support said ship abutting each other when the molds (31; 32; 149; 161; 178) are closed.

11. Method of welding strip (131; 155) comprising the steps of supporting one mold part (31 or 32) having a clamping face (129; 136; 138; 150; 164; 179; 180) with a strip recess channel (130; 134; 135; 140; 154; 166; 184; 185) therein, supporting a second mold part (32 or 31) also having a clamping face (129; 136; 138; 150; 164; 179; 180) with a strip recess channel (130; 134; 135; 140; 154; 166; 184; 185) therein, clamping the mold parts (31 and 32) together, and welding the strip, **characterized by** adjusting said second mold part with respect to said one mold part to form an aligned or transverse strip weld joint (142; 143; 144; 145; 170; 171; 172) wherein said second mold part is supported with respect to said one mold part for 90° adjustments around an axis normal to its clamping face.

12. Method as set forth in claim 11, wherein molten metal is cast through a tap hole (95; 126; 152; 167) in said one maid part (31; 125; 149; 161) to form the weld (133; 146; 157).

13. Method as set forth in claim 11 or 12, wherein the cast metal is formed exothermically.

14. Method as set forth in claim 13, wherein the weld is formed vertically or horizontally and wherein said one mold part is substituted by another mold part having an appropriately oriented tap hole.

15. Method as set forth in one of claims 11 to 14, wherein said one and said second mold part are supported in a hinged fixture (33), said one mold part being pivotally supported on a gimbal pivot (43) extending parallel to the clamping face.

## Patentansprüche

1. Vorrichtung zum Verschweißen flacher Gegenstände wie elektrischer Leiter in Form von Streifen, Litze, Schienen, Band und dergleichen, wobei die Vorrichtung eine Pressform (31) und eine weitere Pressform (32) aufweist, die jeweils wenigstens eine Klemmfläche (129; 136; 138; 150; 164; 179; 180) aufweisen, sowie einen Kanal (130; 134; 135; 140; 154; 166; 184; 185) in der Klemmfläche beider Pressformen, wobei die Kanäle dafür eingerichtet sind, die miteinander zu verscheißenden Gegenstände aufzunehmen, Vorrichtungen zum Zusammenklemmen der Pressformen, wobei sich Schweißgegenstände (131; 132; 155; 156) in den Kanälen befinden, und Vorrichtungen zum Einführen eines Zusatzwerkstoffs bis zu den Gegenständen, um sie miteinander zu verschweißen, **dadurch gekennzeichnet, dass** die Vorrichtung eine Befestigungsvorrichtung (33; 37; 63 bis 66) umfasst, welche eine der Pressformen (31 oder 32) zur 90°-Bewegung trägt, um ihren Kanal parallel oder quer zu dem Kanal der anderen Pressform auszurichten, um einen axial ausgerichteten oder quer liegenden Streifenschweißstoß (142; 143; 144; 145; 170; 171; 172) mit dem Einführen des Zusatzwerkstoffs (133; 146; 157) auszubilden.

2. Vorrichtung gemäß Anspruch 1, wobei eine der Pressformen ein Stichloch (152) zum Einführen des Zusatzwerkstoffs in die Pressform (31, 32; 149, 161; 178) umfasst.

3. Vorrichtung gemäß Anspruch 1 oder 2, wobei die Befestigungsvorrichtung (37, 63 bis 66) eine der Pressformen (31 oder 32) derart abnehmbar trägt, dass sie eine begrenzte Schwenkbewegung um eine Kardanachse (43) ausführen kann.

4. Vorrichtung gemäß einem der Ansprüche 1 bis 3, wobei die Befestigungsvorrichtung (33; 37; 63 bis 66) Vorrichtungen umfasst, welche eine der Pressformen (31 oder 32) abnehmbar tragen zum Austausch mit Pressformen, welche ein horizontal oder vertikal ausgerichtetes Stichloch (152) aufweisen.

5. Vorrichtung gemäß Anspruch 4, wobei die Befestigungsvorrichtung einen Schmelztiegelträger (58; 153) umfasst, der eingesetzt wird, wenn sich die Befestigungsvorrichtung in einer vertikalen Ausrichtung befindet.

6. Vorrichtung gemäß Anspruch 4, wobei eine der Pressformen (31) einen Schmelztiegelsitz (90) umfasst, um einen Schmelztiegel (102) direkt zu tragen, wenn sich die Befestigungsvorrichtung (33; 37; 63 bis 66) in einer horizontalen Ausrichtung befindet.

7. Vorrichtung gemäß einem der Ansprüche 1 bis 6, wobei die Befestigungsvorrichtung (33) eine um ein Scharnier drehbare, zweistückig ausgebildete Befestigungsvorrichtung ist, wobei ein Teil der Befestigungsvorrichtung jeweils für eine Pressform (31, 32) vorgesehen ist.

8. Vorrichtung gemäß Anspruch 5, wobei der Schmelztiegelträger (58; 153) winklig angeordnet und an einem der Befestigungsvorrichtungsteile angebracht ist, um einen Schmelztiegel (102) zu tragen, wenn sich die Befestigungsvorrichtung in einer vertikalen Ausrichtung befindet.

9. Vorrichtung gemäß Anspruch 6, wobei eines der Befestigungsvorrichtungsteile eine der Pressformen (31) mit einem Kardanzapfen (43) trägt, und die Befestigungsvorrichtung eine einstellbare Verschlussposition umfasst, um Pressformen (31, 32) mit unterschiedlichen Abmessungen unterzubringen.

10. Vorrichtung gemäß einem der Ansprüche 1 bis 9, wobei die Kanäle (130; 134; 135; 140; 154; 166; 184; 185) den Streifen aneinander anstoßend halten, wenn die Pressformen (31; 32; 149; 161; 178) geschlossen sind.

11. Verfahren zum Verschweißen von Streifen (131; 155) mit den Schritten des Tragen eines Pressformteils (31 oder 32) mit einer Klemmfläche (129; 136; 138; 150; 164; 179; 180) mit einem Streifenauskehlungskanal (130; 134; 135; 140; 154; 166; 184; 185), der darin ausgebildet ist, des Tragens eines zweiten Pressformteils (32 oder 31), das ebenfalls eine Klemmfläche (129; 136; 138; 150; 164; 179; 180) mit einem Streifenauskehlungskanal (130; 134; 135; 140; 154; 166; 184; 185) darin ausgebildet aufweist, des Zusammenklemmens der Pressformteile (31 und 32) und des Verschweißen des Streifens, **dadurch gekennzeichnet, dass** das zweite Pressformteil bezüglich des einen Pressformteils derart eingestellt wird, dass ein axial ausgerichteter oder quer liegender Streifenschweißstoß (142; 143; 144; 145; 170; 171; 172) ausgebildet wird, wobei das zweite Pressformteil bezüglich des einen Pressformteils derart getragen wird, dass es in einem Winkel von 90° um eine senkrecht zu seiner Klemmfläche liegende Achse einzustellen ist

12. Verfahren gemäß Anspruch 11, wobei geschmolzenes Metall durch ein Stichloch (95; 126; 152; 167) in das eine Pressformteil (31; 125; 149; 161) gegossen wird, um die Schweißnaht (133; 146; 157) herzustellen.

13. Verfahren gemäß Anspruch 11 oder 12, wobei der Metallguss exotherm erfolgt.

14. Verfahren gemäß Anspruch 13, wobei die Schweißnaht vertikal oder horizontal ausgebildet wird, und wobei das eine Pressformteil durch ein anderes Pressformteil mit einem in geeigneter Weise ausgerichteten Stichloch ausgetauscht wird.

15. Verfahren gemäß einem der Ansprüche 11 bis 14, wobei das erste und zweite Pressformteil in einer um ein Schamier schwenkbaren Befestigungsvorrichtung (33) getragen werden, wobei das eine Pressformteil schwenkbar auf einem Kardanzapfen (43) getragen ist, der sich parallel zu der Klemmfläche erstreckt.

## Revendications

1. Dispositif de soudage des objets plats, tels que des conducteurs électriques sous forme de bande, de cordon, de barres, de ruban et similaires, le dispositif comprenant une moule (31) et une autre moule (32), dont chacune comprend au moins une surface de serrage (129 ; 136 ; 138 ; 150 ; 164 ; 179 ; 180), un canal (130 ; 134 ; 135 ; 140 ; 154 ; 166 ; 184 ; 185) étant formé dans la surface de serrage respective des deux moules, les dits canaux étant adaptés à recevoir des objets à souder les uns aux autres, des moyens pour serrer les moules ensemble avec des objets à souder dans les canaux, et des moyens pour introduire un métal d'apport jusqu'aux objets pour les souder les uns aux autres, **caractérisé en ce que** le dit dispositif comprend un dispositif de fixation (33 ; 37 ; 63 à 66), qui porte une des dites moules (31 ou 32) pour un mouvement de 90° pour orienter son canal en parallèle ou transversal au canal de l'autre moule pour former un joint soudé de bande (142 ; 143 ; 144 ; 145 ; 170 ; 171 ; 172) aligné ou transversal par l'introduction du métal d'apport (133 ; 146 ; 157).

2. Dispositif selon la revendication 1, dans lequel une des dites moules comprend un trou de coulée (152) pour l'introduction d'un métal d'apport dans la moule (31, 32 ; 149 ; 161 ; 178).

3. Dispositif selon la revendication 1 ou 2, dans lequel le dit dispositif de fixation (37, 63 à 66) porte de manière amovible l'une des dites moules (31 ou 32) pour un mouvement pivotant limité autour d'un axe de cardan (43).

4. Dispositif selon l'une des revendications 1 à 3, dans lequel le dit dispositif de fixation (33 ; 37 ; 63 à 66) comprend des moyens, qui portent de manière amovible l'une des dites moules (31 ou 32) pour le remplacement par des moules comprenant un trou de coulée (152), qui est orienté horizontalement ou verticalement.

5. Dispositif selon la revendication 4, dans lequel le dit dispositif de fixation comprend un support de creuset (58 ; 153), qui sera utilisé quand le dispositif de fixation se trouve dans une orientation vertical.

6. Dispositif selon la revendication 4, dans lequel une des dites moules (31) comprend un logement de creuset (90) pour porter un creuset (102) directement quand le dit dispositif de fixation (33 ; 37 ; 63 à 66) se trouve dans une orientation horizontal.

7. Dispositif selon l'une des revendications 1 à 6, dans lequel le dit dispositif de fixation (33) est un dispositif de fixation en deux pièces et pivotant autour d'une charnière, une pièce du dit dispositif de fixation étant prévue pour chaque moule (31, 32).

8. Dispositif selon la revendication 5, dans lequel le dit support de creuset (58 ; 153) est angulaire et monté sur une des pièces du dispositif de fixation pour porter un creuset (102) quand le dit dispositif de fixation est dans une orientation vertical.

9. Dispositif selon la revendication 6, dans lequel une des dites pièces du dispositif de fixation porte l'une des dites moules (31) sur un pivot de cardan (43), et le dit dispositif de fixation comprend une position de fermeture réglable pour loger des moules (31, 32) ayant des dimensions différentes.

10. Dispositif selon l'une des revendications 1 à 9, dans lequel les dits canaux (130 ; 134 ; 135 ; 140 ; 154 ; 166 ; 184 ; 185) portent les dites bandes de sorte qu'elles aboutissent l'une à l'autre quand les moules (31 ; 32 ; 149 ; 161; 178) sont fermées.

11. Procédé de soudage de bande (131; 155) comprenant les étapes de porter une pièce de moule (31 ou 32) comprenant une surface de serrage (129 ; 136 ; 138 ; 150 ; 164 ; 179 ; 180) ayant un canal d'évidement de bande (130 ; 134 ; 135 ; 140 ; 154 ; 166 ; 184 ; 185), de porter une deuxième pièce de moule (32 ou 31), qui comprend aussi une surface de serrage (129 ; 136 ; 138 ; 150 ; 164 ; 179 ; 180) ayant un canal d'évidement de bande (130 ; 134 ; 135 ; 140 ; 154 ; 166; 184 ; 185), de serrer les pièces de moule (31 et 32) ensemble et de souder la bande, **caractérisé en ce qu'**on ajuste la dite deuxième pièce de moule par rapport à la dite première pièce de moule pour former un joint soudé de bande aligné ou transversal (142 ; 143 ; 144 ; 145 ; 170 ; 171 ; 172), dans lequel la dite deuxième pièce de moule est portée par rapport à la dite première pièce de moule pour réaliser des ajustements de 90°C autour d'un axe perpendiculaire sur sa surface de serrage.

12. Procédé selon la revendication 11, dans lequel on coule du métal fondu à travers d'un trou de coulée (95 ; 126 ; 152 ; 167) dans la dite première pièce de moule (31 ; 125 ; 149 ; 161) pour former la soudure (133 ; 146 ; 157).

13. Procédé selon la revendication 11 ou 12, dans lequel la pièce coulée en métal est formée de manière exothermique.

14. Procédé selon la revendication 13, dans lequel la soudure est formée verticalement ou horizontalement, et dans lequel la dite première pièce de moule est remplacée par une autre pièce de moule ayant un trou de coulée orienté de manière appropriée.

15. Procédé selon l'une des revendications 11 à 14, dans lequel les dites première et deuxième pièces de moule sont portées dans un dispositif de fixation pivotant autour d'une charnière (33), la dite première pièce de moule étant portée de manière pivotante sur un pivot de cardan (43) qui s'étend en parallèle à la surface de serrage.
